# EUROPEAN PATENT SPECIFICATION

(11) **EP 2 284 718 B1**
(45) Date of publication and mention of the grant of the patent: **20.08.2014**
(21) Application number: 10171912.8
(22) Date of filing: 04.08.2010
(51) Int. Cl.: G06F 13/38, G06F 1/32, H04M 1/725, G06F 13/40, H04M 1/60

(54) **Apparatus and method for determining type of accessory in a portable terminal**
Vorrichtung und Verfahren zum Bestimmen der Art von Zubehör eines tragbaren Endgeräts
Appareil et procédé pour déterminer le type d'accessoire dans un terminal portable

(30) Priority: 05.08.2009 KR 20090071885
(43) Date of publication of application: 16.02.2011
(73) Proprietor: Samsung Electronics Co., Ltd., Suwon-si, Gyeonggi-do, 443-742 (KR)
(72) Inventor: Hwang, Jung-Eun, Seoul (KR)
(74) Representative: Jenkins, Richard Gavin

(56) References cited:
- US-A- 5 568 409
- US-A- 5 783 926
- US-A1- 2004 116 005
- US-A1- 2005 166 076
- US-A1- 2005 268 000
- US-A1- 2009 077 404

## Description

The present invention relates to an apparatus and method for determining the type of an accessory connected to an earphone terminal in a portable terminal. More particularly, the present invention relates to an apparatus and method for, supplying a power source of an Analog-to-Digital Converter (ADC) for determining the type of accessory connected to an earphone terminal only when an accessory is connected, thus reducing the power consumption of the portable terminal.

### 2. Description of the Related Art:

In recent years, portable terminals are gaining popularity due to their convenience. Portable terminal manufacturers are competitively developing portable terminals with more convenient functions to secure additional users. For example, the portable terminals may provide functions of phone books, games, schedulers, Short Message Services (SMS), Multimedia Message Services (MMS), Broadcast Message Services (BMS), Internet services, electronic mail (e-mail) messages, morning wakeup calls, MPEG-1 Audio Layer 3 (MP3) players, digital cameras, and the like.

Recently, the portable terminals are supporting a supplementary function through connection of an accessory (e.g., a television (TV) output cable, a Bluetooth adaptor, and the like.). In one example, the portable terminal can connect with a TV output cable and output data through a large screen of a TV set instead of a screen of the portable terminal. If a user connects a Bluetooth device to a portable terminal not supporting a Bluetooth function to listen to music data, the user can listen to the music data using the Bluetooth function instead of the portable terminal.

In the portable terminal supporting the supplementary function, when an accessory is connected to an earphone terminal, the portable terminal digital converts a signal generated according to the accessory connection and determines the type of the connected accessory. The portable terminal determines the type of accessory depending on a range of the digital converted signal. In order to enable an ADC block determining the type of accessory, the portable terminal makes use of a permanent power source of an audio block. This induces unnecessary power consumption. Even when no accessory is connected, the portable terminal makes unnecessary use of a power source for determining the type of accessory.

In addition, because the portable terminal makes use of a fixed resistance value connected to the power source for the sake of microphone (MIC) performance, a range of an ADC value corresponding to the type of accessory connected to an earphone terminal is limited. Since the range of the ADC value corresponding to the accessory connected to the portable terminal is narrow, the portable terminal can distinguish only a limited number of accessories.

The document US-2004/116005-A1 discloses a memory storing analog-to-digital conversion values of external accessories such as stereo earphones. An ADC converts the resistance of each external accessory coupled to a multipurpose ear jack of the portable terminal into an ADC value, A controller determines the type of accessory by comparing stored ADC values with converted ADC values.

### SUMMARY OF THE INVENTION

An aspect of the present invention is to address at least the above-mentioned problems and/or disadvantages and to provide at least the advantages described below. Accordingly, an aspect of the present invention is to provide an apparatus and method for reducing the power consumption of a portable terminal.

Another aspect of the present invention is to provide an apparatus and method for controlling a time of supply of a power source of an ADC block determining the type of accessory connected to an earphone terminal in a portable terminal, thus reducing the power consumption of the portable terminal.

A further aspect of the present invention is to provide an apparatus and method for making use of a power source of an ADC block determining the type of accessory connected to an earphone terminal, as an independent power source, to expand a range of an ADC value, thus enabling a support of a plurality of accessories in a portable terminal.

The above aspects are achieved by providing an apparatus and method for determining the type of accessory in a portable terminal.

In accordance with an aspect of the present invention, an apparatus for determining the type of accessory in a portable terminal is provided as defined by claim 1.

In accordance with another aspect of the present invention, a method for determining the type of accessory in a portable terminal is provided as defined by claim 8.

In certain embodiments the portable terminal includes an earphone port for connecting an accessory to the portable terminal, an Analog-to-Digital Converter (ADC) for determining a type of the accessory connected to the earphone port, and a switching unit for supplying power to the ADC via an independent power source not used for other operations only while the ADC is determining the type of the accessory.

In certain embodiments the method includes attaching an accessory to a portable terminal, supplying power to an Analog-to-Digital Converter (ADC) via a power source independent of a power source used for other operations of the portable terminal, determining a type of the accessory via the ADC, and stopping the supply of the power to the ADC after the type of the accessory is determined.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:

FIG. 1 is a block diagram illustrating a construction of a portable terminal performing a switching process of an accessory connection terminal according to an exemplary embodiment of the present invention;

FIG. 2 is a flow diagram illustrating a switching process of an accessory connection terminal in a portable terminal according to an exemplary embodiment of the present invention;

FIG. 3A is a diagram illustrating conditions before connecting an accessory to a portable terminal according to an exemplary embodiment of the present invention; and

FIG. 3B is a diagram illustrating conditions after connecting an accessory to a portable terminal according to an exemplary embodiment of the present invention.

Throughout the drawings, like reference numerals will be understood to refer to like parts, components and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

The terms and words used in the following description and claims are not limited to the bibliographical meanings, but are merely used by the inventor to enable a clear and consistent understanding of the invention. Accordingly, it should be apparent to those skilled in the art that the following description of exemplary embodiments of the present invention are provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

Exemplary embodiments of the present invention provide an apparatus and method for controlling a time of supply of a power source of an Analog-to-Digital Converter (ADC) block determining the type of accessory connected to an earphone terminal in a portable terminal, thus reducing the power consumption of the portable terminal. The portable terminal may also employ a power source of an ADC block as an independent power source to expand a range of an ADC value, thus enabling support for a plurality of accessories. In the following description, an accessory, which operates in connection with the portable terminal, may be an external device such as an earphone, a headset, and the like, or a cable such as a television (TV) output cable for connecting the portable terminal with the external device.

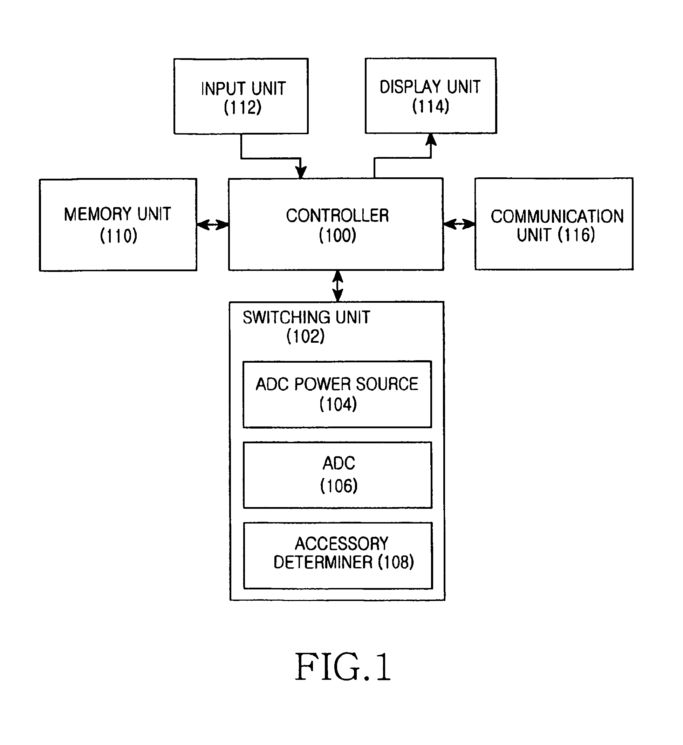

FIG. 1 is a block diagram illustrating a construction of a portable terminal performing a switching process of an accessory connection terminal according to an exemplary embodiment of the present invention.

Referring to FIG. 1, the portable terminal may include a controller 100, a switching unit 102, a memory unit 110, an input unit 112, a display unit 114, and a communication unit 116. The switching unit 102 may further include an ADC power source 104, an ADC 106, and an accessory determiner 108. The portable terminal may include additional units. Similarly, the functionality of two or more of the above units may be integrated into a single component. The portable terminal also includes an earphone terminal (not shown) having an earphone port to which an accessory may be connected.

The controller 100 of the portable terminal controls general operations of the portable terminal. For example, the controller 100 performs processing and control for voice telephony, data communication, and other applications. According to an exemplary embodiment of the present invention, when the controller 100 determines that a separate accessory is connected to the earphone terminal, the controller 100 enables the ADC power source 104 of the switching unit 102 and determines the type of accessory connected to the earphone terminal. The controller 100 switches a switch connected with the earphone terminal to a terminal corresponding to the determined type of accessory.

In order to reduce the power consumption of the portable terminal, the controller 100 enables the ADC power source 104 to the ADC 106 only when that an accessory is connected to the earphone terminal, and disable the ADC power source 104 in case that the accessory is not connected to the earphone terminal. The ADC power source may be a separate power source (not shown) that is independent of an audio block power source that supplies power to the ADC for other operations.

The controller 100 may employ a variable resistance value, not a fixed resistance value connected to a power source for an existing ADC operation, using the ADC power source 104, and expands an ADC range, thus enabling the use of a plurality of accessories.

Under the control of the controller 100, the switching unit 102 performs a switching process of reducing the power consumption of the portable terminal according to an exemplary embodiment of the present invention and a switching process of enabling the use of a plurality of accessories. In order to reduce the power consumption of the portable terminal under instructions of the controller 100, the switching unit 102 enables the ADC power source 104 only when an accessory is connected to the earphone terminal and disables the ADC power source 104 when the accessory is not connected.

The switching unit 102 allows the use of a variable resistance value, not a fixed resistance value connected to a power source for the sake of an existing ADC operation (i.e., a fixed resistance value connected between an audio block and a microphone (MIC) power source for the sake of a normal operation of a MIC), using the ADC power source 104, thus being capable of expanding an ADC range. This makes the use of a plurality of accessories possible.

The ADC power source 104 of the switching unit 102 supplies a power source to the ADC 106 to determine the type of the connected accessory. The ADC power source 104 does not supply a power source to the ADC 106 before an accessory is connected to the portable terminal.

Under the control of the switching unit 102, the ADC 106 converts an analog signal generated according to the accessory connection into a digital signal and provides the digital signal to the accessory determiner 108. The accessory determiner 108 determines the type of accessory connected to the portable terminal using an ADC value received from the ADC 106. The accessory determiner 108 determines if the ADC value received from the ADC 106 corresponds to a range of a previously stored ADC value. If so, the accessory determiner 108 determines that an accessory corresponding to the range including the previously stored ADC values is connected with the portable terminal.

The memory unit 110 includes a Read Only Memory (ROM), a Random Access Memory (RAM), a flash ROM, and the like. The ROM stores a microcode (i.e., code) of a program for processing and controlling the controller 100 and the switching unit 102 and a variety of kinds of reference data. The RAM, a working memory of the controller 100, stores temporary data generated in execution of a variety of kinds of programs. The flash ROM stores several kinds of updateable depository data such as a phone book, an outgoing message, an incoming message, and information on a user's touch input point.

The input unit 112 includes numeral key buttons '0' to '9', a menu button, a cancel button, an OK button, a talk button, an end button, an Internet button, navigation key (or direction key) buttons, a plurality of function keys such as a character input key, and the like. The input unit 112 provides key input data corresponding to a key pressed by a user to the controller 100. These keys are merely examples of keys which may make up the input unit 112; the input unit may include additional or different keys, or different input mechanisms through which the user supplies input to the portable terminal.

The display unit 114 displays state information generated during operation of the portable terminal, a limited number of characters, moving pictures, still pictures, and the like. The display unit 114 can be a color Liquid Crystal Display (LCD), an Active Mode Organic Light Emitting Diode (AMOLED), and the like. The display unit 114 can include a touch input device and when applied to a portable terminal of a touch input scheme, can be used as the input unit 112.

The communication unit 116 transmits, receives, and processes a radio or other wireless signal through an antenna (not illustrated). For example, in a transmission mode, the communication unit 116 processes original data through channel coding and spreading, converts the original data into a Radio Frequency (RF) signal, and transmits the RF signal. In a reception mode, the communication unit 116 converts a received RF signal into a baseband signal, processes the baseband signal through de-spreading and channel decoding, and restores the signal to original data.

The portable terminal may include a terminal (not illustrated) connectable with a plurality of accessories, such as an earphone terminal or accessory-specific terminal. Furthermore, a role of the switching unit 102 can be implemented by the controller 100 of the portable terminal. However, these are separately constructed and shown herein as an exemplary construction for convenience of description, and do not limit the scope of the present invention. It would be understood by those skilled in the art that various modifications can be made within the scope of the present invention. For example, construction can also be such that all of them are processed in the controller 100.

The above description is made for an apparatus for supplying a power source of an ADC for determining the type of accessory connected to an earphone terminal in a portable terminal only when the accessory is connected, according to an exemplary embodiment of the present invention, thereby reducing the power consumption of the portable terminal and enabling a support of a plurality of accessories. The following description is made for a method for reducing the power consumption of a portable terminal and enabling a support of a plurality of accessories, according to the exemplary embodiment of the present invention.

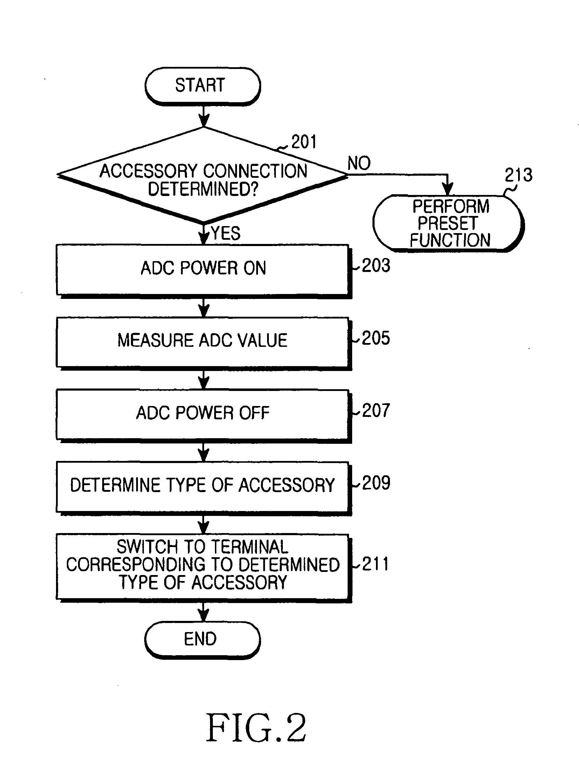

FIG. 2 is a flow diagram illustrating a switching process of an accessory connection terminal in a portable terminal according to an exemplary embodiment of the present invention.

Referring to FIG. 2, in step 201, the portable terminal determines if an accessory is connected to the portable terminal. Connecting the accessory refers to connecting an accessory, such as a TV output cable, a headset, and the like, to an earphone terminal of the portable terminal.

If it is determined that the accessory is not connected in step 201, the portable terminal proceeds to step 213 and performs a corresponding function (e.g., a standby mode). If it is determined that the accessory is connected in step 201, the portable terminal proceeds to step 203 and enables an ADC power source 104 of a switching unit 102 to supply a power source to the ADC 106 for ADC converting a signal generated according to the accessory connection. In step 205, the portable terminal proceeds to step 205 and enables the ADC 106 using the power source received from the ADC power source 104 and measures an ADC value of the signal generated according to the accessory connection.

Unlike a conventional portable terminal, which always supplies a power source to an ADC using a permanent power source of an audio block, the portable terminal according to an exemplary embodiment of the present invention enables the ADC power source 104 only after an accessory is connected to the portable terminal, and reduces the power consumption of the portable terminal.

After supplying the power source and measuring the ADC value of the signal generated according to the accessory connection, the portable terminal proceeds to step 207 and disables the ADC power source 104. In step 209, the portable terminal controls the accessory determiner 108 to determine the type of accessory connected with the portable terminal using the measured ADC value of step 205. The portable terminal can make use of the independent ADC power source to expand an ADC range of the portable terminal and support a plurality of accessories according to an exemplary embodiment of the present invention.

A portable terminal according to exemplary embodiments of the present invention makes use of an independent power source to enable a resistance control for ADC voltage control irrespective of the performance of a MIC and expand a range of an ADC value for a support of various accessories, whereas a conventional portable terminal employs a fixed resistance between an audio block and a MIC power source for the sake of a normal operation of a MIC so as to determine connection of an accessory using the MIC power source of the audio block.

In step 211, the portable terminal proceeds to step 211 and switches to a terminal corresponding to the type of accessory determined in step 209, performing a corresponding operation. The portable terminal according to exemplary embodiments of the present invention can supply an ADC power source for determining the type of accessory only when connecting an accessory to prevent the power consumption of the portable terminal, and make use of a separate ADC power source to expand a range of an ADC value through a resistance control for ADC voltage control and support a plurality of accessories.

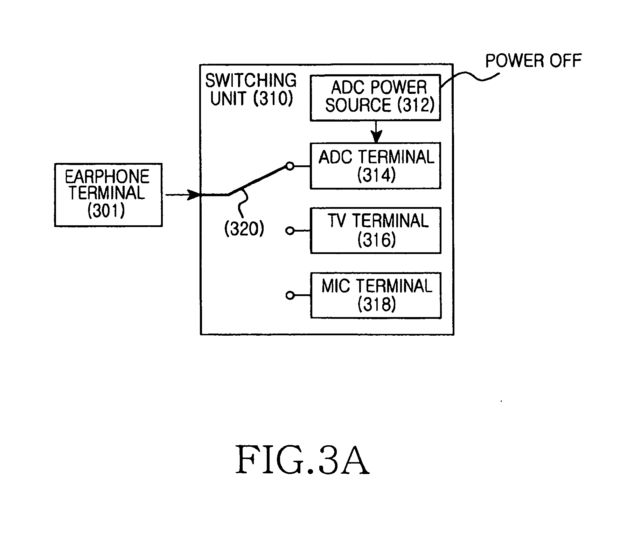

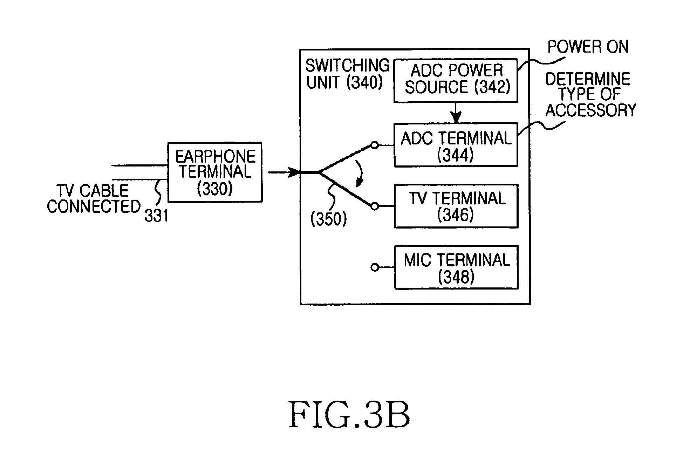

FIGs. 3A and 3B are diagrams illustrating a switching process of an accessory connection terminal in a portable terminal according to an exemplary embodiment of the present invention.

FIG. 3A is a diagram illustrating conditions before connecting an accessory to a portable terminal according to an exemplary embodiment of the present invention.

Referring to FIG. 3A, the portable terminal according to an exemplary embodiment of the present invention makes use of an ADC terminal 314 separating various accessory terminals (e.g., a TV terminal 316, a MIC terminal 318, and the like), and makes use of an ADC power source 312 that is a separate independent power source. Until an accessory is connected to an earphone terminal 301 of the portable terminal, a switching unit 310 maintains the ADC power source 312 in a powered off state such that a switch 310 connects the earphone terminal 301 to the ADC terminal 314. When an accessory is connected to the earphone terminal 301 of the portable terminal, the switching unit 310 releases the connection of the ADC terminal 314 to reduce the power consumption of the portable terminal.

By not determining connection of an accessory using a MIC power source of an audio block but enabling a control of a resistance value for ADC voltage control irrespective of the performance of a MIC using the separate ADC power source 312 as described above, the portable terminal according to exemplary embodiments of the present invention can expand an ADC range for a support of a plurality of accessories.

When the accessory is connected to the earphone terminal 301 of the portable terminal, the portable terminal enables the ADC power source 312 to supply a power source to the ADC terminal 314, and determines the type of accessory connected to the earphone terminal 301, and switches to a terminal corresponding to the determined type of accessory. For example, when the portable terminal determines that a TV output cable is connected to the earphone terminal 301, the portable terminal switches to the TV terminal 316 from the ADC terminal 314. Similarly, when the portable terminal determines that a MIC is connected to the earphone terminal 301, the portable terminal switches to the MIC terminal 318 from the ADC terminal 314.

FIG. 3B is a diagram illustrating conditions after connecting an accessory to a portable terminal according to an exemplary embodiment of the present invention.

Referring to FIG. 3B, when the portable terminal determines that an accessory (e.g., a TV output cable 331) is connected to an earphone terminal 330, the portable terminal enables a disabled ADC power source 342 of a switching unit 340 to supply a power source to an ADC terminal 344. Accordingly, the portable terminal determines the type of accessory connected to the earphone terminal 330 using an ADC value of a signal, which is generated as the accessory is connected to the earphone terminal 330. As above, the portable terminal does not supply a power source to the ADC terminal 344 before the accessory is connected, and supplies the power source to the ADC terminal 344 only after the accessory is connected, thus being capable of preventing the power consumption of the portable terminal.

When the portable terminal determines that the TV output cable 331 is connected to the earphone terminal 330 using a signal generated according to the connection of the TV output cable 331, the portable terminal switches to a TV terminal 346 from the ADC terminal 344 enabled according to the accessory connection via a switch 350. When the portable terminal determines that a MIC is connected to the earphone terminal 330, the portable terminal switches to a MIC terminal 348 from the ADC terminal 344, thus reducing power consumption.

As described above, exemplary embodiments of the present invention relate to an apparatus and method for determining a type of an accessory connected to an earphone terminal in a portable terminal. Portable terminals according to exemplary embodiments of the present invention control a time of supply of a power source of an ADC block determining the type of accessory connected to an earphone terminal to reduce the power consumption of the portable terminal, and make use of a power source of an ADC block as an independent power source to expand a range of an ADC value, thus enabling a support of a plurality of accessories in the portable terminal.

While the invention has been shown and described with reference to certain exemplary embodiments thereof, it will be understood by those skilled in the art that various changes in form and details may be made therein without departing from the scope of the invention as defined by the appended claims and their equivalents.

## Claims

1. A portable terminal for determining a type of an accessory, the portable terminal comprising:
an Analog-to-Digital Converter, ADC, power source (104) adapted to supply power to operate an ADC (106); and
a controller (100), **characterized in that** the controller is adapted to enable the ADC power source (104) when the accessory is connected to the portable terminal and to disable the ADC power source (104) from supplying power to the ADC when the accessory is not connected to the portable terminal,
wherein the ADC power source (104) is arranged to supply power to operate the ADC to determine the type of the accessory and is independent from a second power source arranged to supply power to the ADC for other operations.

2. A portable terminal in accordance with claim 1, wherein the controller (100) comprises the ADC power source (104), the ADC, and an accessory determiner,
the ADC (106) is adapted to ADC convert a signal generated according to the connected accessory ,
the accessory determiner (108) is adapted to determine the type of connected accessory using the ADC-converted signal, and the controller is further adapted to disable the ADC power source (104) from supplying power to the ADC after the type of the accessory is determined.

3. A portable terminal in accordance with any preceding claim, wherein the controller (100) comprises an ADC terminal separate from accessory terminals.

4. A portable terminal in accordance with claim 3, wherein, before the accessory is connected, the controller (100) maintains a connection with the ADC terminal and, after the accessory is connected, the controller (100) releases the connection with the ADC terminal and switches the connection to a terminal of a corresponding accessory.

5. A portable terminal in accordance with claim 2, wherein the controller (100) employs the ADC power source (104) to supply power to operate the ADC (106) and to enable a resistance value control for ADC voltage control.

6. A portable terminal in accordance with claim 5, wherein the controller (100) expands a range of converting the signal generated according to the connected accessory through the resistance value control for the ADC voltage control, and enables a support of a plurality of accessories.

7. A portable terminal in accordance with claim 1, wherein the second power source is a microphone power source of an audio block.

8. A method for determining a type of accessory in a portable terminal, the method comprising:
determining whether an accessory is connected to the portable terminal; and
enabling an Analog-to-Digital Converter, ADC, power source (104) to supply power to operate an ADC (106) when the accessory is connected to the portable terminal and disabling the ADC power source (104) from supplying power to the ADC (106) when the accessory is not connected to the portable terminal,
wherein the ADC power source (104) is arranged to supply power to operate the ADC to determine the type of the accessory and is independent from a second power source arranged to supply power to the ADC for other operations.

9. The method of claim 8, further comprising:
converting a signal generated according to the connected accessory into a digital signal;
determining the type of connected accessory using the converted signal; and
after determining the type of connected accessory, stopping the supply of power from the ADC power source (104) to the ADC (106).

10. The method of claim 9, wherein the method makes use of an ADC terminal separate from accessory terminals.

11. The method of claim 10, further comprising, before the accessory is connected, maintaining a connection with the ADC terminal; and
after the accessory is connected, releasing the connection of the ADC terminal and switching the connection to a terminal of a corresponding accessory.

12. The method of claim 11, wherein the method expands a range of converting the signal generated according to the connected accessory through the resistance value control for the ADC voltage control, and enables a support of a plurality of accessories.

13. The method of claim 8, wherein the ADC power source (104) is independent of a microphone power source of an audio block.

## Patentansprüche

1. Tragbares Endgerät zum Ermitteln eines Typs eines Zubehörs, wobei das tragbare Endgerät Folgendes umfasst:
einen Analog-Digital-Wandler, ADW, eine Stromquelle (104), die dafür ausgelegt ist, einen ADW (106) mit Strom zu versorgen und diesen zu betreiben; und
eine Steuerung (100), **dadurch gekennzeichnet, dass** die Steuerung ferner für Folgendes ausgelegt ist: Aktivieren der ADW-Stromquelle (104), wenn das Zubehör mit dem tragbaren Endgerät verbunden ist, und Deaktivieren der ADW-Stromquelle (104), so dass sie den ADW nicht mehr mit Strom versorgt, wenn das Zubehör nicht mit dem tragbaren Endgerät verbunden ist,
wobei die ADW-Stromquelle (104) so ausgelegt ist, dass sie Strom für den Betrieb des ADW liefert, um den Typ des Zubehörs zu ermitteln, und von einer zweiten Stromquelle unabhängig ist, die dafür ausgelegt ist, den ADW für andere Vorgänge mit Strom zu versorgen.

2. Tragbares Endgerät nach Anspruch 1, wobei die Steuerung (100) Folgendes umfasst: die ADW-Stromquelle (104), den ADW, und einen Zubehörbestimmer,
wobei der ADW (106) dafür ausgelegt ist, ein Signal analog-digital umzuwandeln, das gemäß dem angeschlossenen Zubehör erzeugt wird,
wobei der Zubehörbestimmer (108) für Folgendes ausgelegt ist: Ermitteln des Typs des angeschlossenen Zubehörs unter Verwendung des analog-digital umgewandelten Signals, und die Steuerung ferner dafür ausgelegt ist, die ADW-Stromquelle (104) zu deaktivieren, so dass sie den ADW nicht mehr mit Strom versorgt, nachdem der Typ des Zubehörs ermittelt wurde.

3. Tragbares Endgerät nach einem der vorhergehenden Ansprüche, wobei die Steuerung (100) ein ADW-Endgerät umfasst, das von Zubehörendgeräten getrennt ist.

4. Tragbares Endgerät nach Anspruch 3, wobei, bevor das Zubehör angeschlossen ist, die Steuerung (100) eine Verbindung mit dem ADW-Endgerät unterhält und, nachdem das Zubehör angeschlossen ist, die Steuerung (100) die Verbindung mit dem ADW-Endgerät trennt und die Verbindung zu einem Endgerät eines entsprechenden Zubehörs umschaltet.

5. Tragbares Endgerät nach Anspruch 2, wobei die Steuerung (100) die ADW-Stromquelle (104) für Folgendes verwendet: zur Stromversorgung des ADW (106), um diesen zu betreiben, und zur Aktivierung einer Widerstandswertsteuerung zur Regelung der ADW-Spannung.

6. Tragbares Endgerät nach Anspruch 5, wobei die Steuerung (100) einen Bereich der Umwandlung des Signals, das gemäß dem angeschlossenen Zubehör erzeugt wird, durch die Widerstandswertsteuerung zur Regelung der ADW-Spannung erweitert, und eine Unterstützung einer Vielzahl von Zubehör ermöglicht.

7. Tragbares Endgerät nach Anspruch 1, wobei die zweite Stromquelle eine Mikrofonstromquelle eines Audioblocks ist.

8. Verfahren zur Ermittlung eines Typs von Zubehör in einem tragbaren Endgerät, wobei das Verfahren Folgendes umfasst:
Ermitteln, ob ein Zubehör mit dem tragbaren Endgerät verbunden ist, und Aktivieren einer Stromquelle (104) eines Analog-Digital-Wandlers, ADW, zur Stromversorgung eines ADW (106), um diesen zu betreiben, wenn das Zubehör mit dem tragbaren Endgerät verbunden ist, und Deaktivieren der ADW-Stromquelle (104), damit diese den ADW (106) nicht mit Strom versorgt, wenn das Zubehör nicht mit dem tragbaren Endgerät verbunden ist,
wobei die ADW-Stromquelle (104) so angeordnet ist, dass sie den ADW (106) mit Strom versorgt, um diesen zu betreiben, um den Typ des Zubehörs zu ermitteln, und von einer zweiten Stromquelle unabhängig ist, die dafür ausgelegt ist, den ADW für andere Vorgänge mit Strom zu versorgen.

9. Verfahren nach Anspruch 8, das ferner Folgendes umfasst:
Umwandeln eines Signals, das gemäß dem angeschlossenen Zubehör in ein digitales Signal erzeugt wird;
Ermitteln des Typs des angeschlossenen Zubehörs unter Verwendung des umgewandelten Signals, und
nach der Ermittlung des Typs des angeschlossenen Zubehörs Stoppen der Zufuhr von Strom von der ADW-Stromquelle (104) zum ADW (106).

10. Verfahren nach Anspruch 9, wobei das Verfahren ein ADW-Endgerät nutzt, das von Zubehörendgeräten getrennt ist.

11. Verfahren nach Anspruch 10, das ferner Folgendes umfasst: bevor das Zubehör angeschlossen ist, Unterhalten einer Verbindung mit dem ADW-Endgerät, und,
nachdem das Zubehör angeschlossen ist, Trennen der Verbindung des ADW-Endgerätes und Umschalten der Verbindung zu einem Endgerät eines entsprechenden Zubehörs.

12. Verfahren nach Anspruch 11, wobei das Verfahren einen Bereich der Umwandlung des Signals, das gemäß dem angeschlossenen Zubehör erzeugt wird, durch die Widerstandswertsteuerung zur Regelung der ADW-Spannung erweitert, und eine Unterstützung einer Vielzahl von Zubehör ermöglicht.

13. Verfahren nach Anspruch 8, wobei die ADW-Stromquelle (104) unabhängig von einer Mikrophonstromquelle eines Audioblocks ist.

## Revendications

1. Un terminal portatif destiné à la détermination d'un type d'un accessoire, le terminal portatif comprenant :
une source d'alimentation électrique (104) de convertisseur analogique à numérique, ADC, adaptée de façon à fournir une alimentation électrique destinée à actionner un ADC (106), et
un dispositif de commande (100), **caractérisé en ce que** le dispositif de commande est adapté de façon à activer la source d'alimentation électrique ADC (104) lorsque l'accessoire est raccordé au terminal portatif et à empêcher la source d'alimentation électrique ADC (104) de fournir une alimentation électrique à l'ADC lorsque l'accessoire n'est pas raccordé au terminal portatif,
où la source d'alimentation électrique ADC (104) est agencé de façon à fournir une alimentation électrique destinée à actionner l'ADC de façon à déterminer le type de l'accessoire et est indépendante d'une deuxième source d'alimentation électrique agencée de façon à fournir une alimentation électrique à l'ADC pour d'autres opérations.

2. Un terminal portatif selon la Revendication 1, où le dispositif de commande (100) comprend la source d'alimentation électrique ADC (104), l'ADC et un dispositif de détermination d'accessoire,
l'ADC (106) est adapté de façon à convertir d'analogique à numérique un signal généré selon l'accessoire raccordé,
le dispositif de détermination d'accessoire (108) est adapté de façon à déterminer le type d'accessoire raccordé au moyen du signal converti d'analogique à numérique, et le dispositif de commande est en outre adapté de façon à empêcher la source d'alimentation électrique ADC (104) de fournir une alimentation électrique à l'ADC une fois que le type de l'accessoire est déterminé.

3. Un terminal portatif selon l'une quelconque des Revendications précédentes, où le dispositif de commande (100) comprend un terminal ADC distinct de terminaux d'accessoire.

4. Un terminal portatif selon la Revendication 3, où, avant que l'accessoire ne soit raccordé, le dispositif de commande (100) maintient un raccordement au terminal ADC et, une fois que l'accessoire est raccordé, le dispositif de commande (100) libère le raccordement au terminal ADC et commute le raccordement vers un terminal d'un accessoire correspondant.

5. Un terminal portatif selon la Revendication 2, où le dispositif de commande (100) utilise la source d'alimentation électrique ADC (104) de façon à fournir une alimentation électrique destinée à actionner l'ADC (106) et à activer une commande de valeur de résistance pour une régulation de tension ADC.

6. Un terminal portatif selon la Revendication 5, où le dispositif de commande (100) étend une plage de conversion du signal généré selon l'accessoire raccordé par l'intermédiaire de la commande de valeur de résistance pour la régulation de tension ADC et active un support d'une pluralité d'accessoires.

7. Un terminal portatif selon la Revendication 1, où la deuxième source d'alimentation électrique est une source d'alimentation électrique de microphone d'un bloc audio.

8. Un procédé de détermination d'un type d'accessoire dans un terminal portatif, le procédé comprenant :
la détermination si un accessoire est raccordé au terminal portatif, et
l'activation d'une source d'alimentation électrique (104) de convertisseur analogique à numérique, ADC, de façon à fournir une alimentation électrique destinée à actionner un ADC (106) lorsque l'accessoire est raccordé au terminal portatif et à empêcher la source d'alimentation électrique ADC (104) de fournir une alimentation électrique à l'ADC (106) lorsque l'accessoire n'est pas raccordé au terminal portatif,
où la source d'alimentation électrique ADC (104) est agencée de façon à fournir une alimentation électrique destinée à actionner l'ADC de façon à déterminer le type de l'accessoire et est indépendante d'une deuxième source d'alimentation électrique agencée de façon à fournir une alimentation électrique à l'ADC pour d'autres opérations.

9. Le procédé selon la Revendication 8, comprenant en outre :
la conversion d'un signal généré selon l'accessoire raccordé en un signal numérique,
la détermination du type d'accessoire raccordé au moyen du signal converti, et
après la détermination du type d'accessoire raccordé, l'arrêt de la fourniture d'une alimentation électrique de la source d'alimentation électrique ADC (104) à l'ADC (106).

10. Le procédé selon la Revendication 9, où le procédé utilise un terminal ADC distinct de terminaux d'accessoire.

11. Le procédé selon la Revendication 10, comprenant en outre, avant que l'accessoire ne soit raccordé, le maintien d'un raccordement au terminal ADC, et
une fois que l'accessoire est raccordé, la libération du raccordement du terminal ADC et la commutation du raccordement vers un terminal d'un accessoire correspondant.

12. Le procédé selon la Revendication 11, où le procédé étend une plage de conversion du signal généré selon l'accessoire raccordé par l'intermédiaire de la commande de valeur de résistance pour la régulation de tension ADC et active un support d'une pluralité d'accessoires.

13. Le procédé selon la Revendication 8, où la source d'alimentation électrique ADC (104) est indépendante d'une source d'alimentation électrique de microphone d'un bloc audio.
